Europäisches Patentamt

European Patent Office

Office européen des brevets

(19)

(11) Veröffentlichungsnummer: **0 052 185**
**B1**

(12) # EUROPÄISCHE PATENTSCHRIFT

(45) Veröffentlichungstag der Patentschrift:
**19.06.85**

(51) Int. Cl.⁴: **F 16 P 3/20**

(21) Anmeldenummer: **81106663.8**

(22) Anmeldetag: **27.08.81**

(54) Elektronische Zweihandsicherung für Werkzeuge.

(30) Priorität: **15.11.80 DE 3043264**

(43) Veröffentlichungstag der Anmeldung:
**26.05.82 Patentblatt 82/21**

(45) Bekanntmachung des Hinweises auf die Patenterteilung:
**19.06.85 Patentblatt 85/25**

(84) Benannte Vertragsstaaten:
**CH DE FR GB LI NL**

(56) Entgegenhaltungen:
**DE - B - 1 490 456**
**FR - A - 2 348 644**
**FR - A - 2 355 413**
**FR - A - 2 392 437**
**US - A - 3 641 410**
**US - A - 3 651 391**

(73) Patentinhaber: **ROBERT BOSCH GMBH, Postfach 50,
D-7000 Stuttgart 1 (DE)**

(72) Erfinder: **Günther, Klaus, Schimmelreiterweg 32,
D-7000 Stuttgart 80 (DE)**
Erfinder: **Hornung, Friedrich, Dipl.-Ing., Am
Ochsenwald 10A, D-7000 Stuttgart 80 (DE)**
Erfinder: **Paule, Kurt, Lauxweg 19, D-7000 Stuttgart
Heumaden (DE)**
Erfinder: **Schädlich, Fritz, Ing. grad., Panoramastrasse 4,
D-7022 Leinfelden-Echterdingen (DE)**

## Beschreibung

Die Erfindung geht aus von einer Zweihandsicherung nach der Gattung der Hauptanspruchs. Zweihandsicherungen sind bereits bekannt. Entweder wirkt auf einen Schalter eine Mechanik ein, durch die der Schalter nur dann betätigt wird, wenn zwei Hebel gleichzeitig gedrückt sind. Eine andere Lösung ist, zwei räumlich getrennte Schalter vorzusehen, so daß das elektrische Gerät nur beim Drücken beider Schalter in Betrieb genommen werden kann. Nachteilig bei beiden Ausführungen ist, daß die Anordnung der Schalter nicht beliebig gewählt werden kann, da ihre Lage durch die Betätigungsmechanik fixiert ist, so daß eine ergonomische Anpassung an die Person des die Maschine Bedienenden nicht möglich ist. Die Mechanik hat weiterhin den Nachteil, daß sie anfällig gegen Stoß und Schmutz ist und eine zusätzliche Kraft für den Schalter aufgebracht werden muß, wodurch die Handhabung anstrengender und ermüdender ist. Zudem ist durch einfache Manipulation, beispielsweise dem Zubinden mittels Schnur, ein mechanischer Schalter in der Einschaltstellung zu fixieren, so daß der Schutzeffekt der Zweihandbedienung hinfällig ist.

Aus der US-A-3 651 391 ist es bekannt, für die Sicherung von elektrischen Geräten elektrische Schalter vorzusehen, die als sensible Flächen ausgebildet sind. Die dort gezeigte und beschriebene Schaltungsanordnung hat jedoch den Nachteil, daß die Sensorflächen nur dann wirksam werden, wenn eine bestimmte Polung des Netzsteckers eingehalten wird. Beim Einstecken des Steckers in eine Steckdose ist daher zu beachten, daß dieser nur in einer bestimmten Richtung einführbar ist. Dies ist dann von Nachteil, wenn der Stecker auf zwei oder mehrere verschiedene Arten einzuführen ist. Die Schaltungsanordnung weist zudem einen sehr hohen Bauteilaufwand auf, so daß der Aufbau der Schaltung recht umfangreich und teuer ist.

Der erfindungsgemäße Zweihandschalter mit den kennzeichnenden Merkmalen des Hauptanspruchs hat demgegenüber den Vorteil, daß er bei einer beliebigen Polung der Versorgungsspannung betriebsbereit ist. Als weiterer Vorteil ist anzusehen, daß die Zahl der verwendeten Bauelemente gering ist, so daß die Anordnung auch leicht in tragbaren und kleinen Geräten unterbringbar ist. Vorteilhafterweise sind die Widerstände oder Kondensatoren in jedem Zweig der Netzzuleitung etwa gleich groß zu machen, so daß die Funktion des Gerätes bei den verschiedenen Polungen des Netzsteckers gleich ist.

Durch die in den Unteransprüchen aufgeführten Maßnahmen sind vorteilhafte Weiterbildungen und Verbesserungen der im Hauptanspruch angegebenen Zweihandsicherung möglich.

Obwohl bereits durch Messung des Spannungsabfalls an den Widerständen festgestellt werden kann, ob die sensiblen Flächen berührt sind oder nicht, ist es vorteilhaft, als Geber in den Zuleitungen zu den sensiblen Flächen einen Optokoppler einzuschalten. Dadurch wird die Potentialdifferenz zwischen der sensiblen Fläche und dem Steuereingang des Triac auf einfache Weise überbrückt. Eine solche Auswertung gestaltet sich dann besonders einfach, wenn der Geber des Optokopplers aus einer Glimmlampe gebildet wird, die direkt auf den Strom, der von der berührten Fläche geliefert wird, anspricht. Es können jedoch auch Transistoren oder Feldeffekttransistoren als Stromsensoren verwendet werden. Um mechanisch bewegliche Kontakte zum Einschalten und Ausschalten des Gerätes, wie Stromschütze oder Relais, zu vermeiden, ist es günstig, wenn der Stromsensor auf einen Triac oder Thyristor einwirkt. Hierbei kann eine Auswerteschaltung zwischengeschaltet sein, die den Triac oder Thyristor zündet. Diese Maßnahme ist dann besonders vorteilhaft, wenn noch weitere Funktionen, wie beispielsweise eine Drehzahlregelung bei Motoren, erfüllt werden sollen. Solche Auswerteschaltungen sind heute bereits als integrierte Schaltkreise käuflich. Soll der Aufwand gering gehalten werden, so ist es vorteilhaft, als Auswerteschaltung eine übliche RC-Zündschaltung zu verwenden. Dadurch läßt sich eine besonders einfache und billige Ausgestaltung der Erfindung erreichen.

Besonders vorteilhaft ist es, zwischen die beiden Netzzuleitungen die Reihenschaltung eines Kondensators oder Widerstandes mit einer Triggerdiode, einem weiteren Kondensator und einem Widerstand vorzunehmen. Dadurch läßt sich die Anzahl der Bauelemente besonders gering halten und gleichzeitig eine gute Entstörung erreichen. Weiterhin ist es günstig, parallel zur Triggerdiode die Hauptstrecke von zumindest einem steuerbaren Bauelement zu legen. Dadurch läßt sich auf direktem Wege ein Zünden der Triggerdiode bei fehlenden Sicherungsmaßnahmen unterbinden. Um ein sicheres Zünden beim Berühren der sensiblen Flächen zu gewährleisten, ist es zweckmäßig, die sensible Fläche über ein Widerstands-Dioden-Netzwerk auf den Steuereingang des steuerbaren Bauelements einwirken zu lassen. Dadurch ist es möglich, entweder die negative oder die positive Halbwelle zum Ansteuern des steuerbaren Bauelements zu verwenden. Weiterhin ist es vorteilhaft, parallel zur Triggerdiode einen ohmschen Spannungsteiler mit Widerständen zu schalten, an dessen Mittelabgriff über Widerstände sensible Flächen angeschlossen sind. Die Kondensatoren oder Widerstände im Hauptstromkreis können dann zusätzlich als Widerstände des Spannungsteilers dienen und erhöhen somit die Sicherheit des Gerätes. Das RC-Netzwerk des Hauptstromkreises läßt sich gleichzeitig als Zündschaltung verwenden, wenn parallel zu dem weiteren Widerstand die Gate-Kathodenstrecke des Triacs oder des Thyristors angeschlossen ist.

Die sensiblen Flächen sind zweckmäßigerweise in den Handgriffen der elektrischen Geräte untergebracht, so daß beim Berühren der Handgriffe die Freigabe der elektrischen Schaltung erfolgt. Weiterhin ist es günstig, die Handgriffe auf der gesamten begreifbaren Fläche mit sensibler Fläche zu belegen, so daß es auf den Berührungspunkt selbst nicht ankommt.

Diese Schaltung läßt sich besonders vorteilhaft dort anwenden, wo eine Zweihandsicherung gesetzlich vorgeschrieben oder wünschenswert ist. Dies sind insbesondere Stanzmaschinen oder auch Elektrowerkzeuge wie Heckenscheren oder Sägen.

Ausführungsbeispiele der Erfindung sind in der Zeichnung dargestellt und in der nachfolgenden Beschreibung näher erläutert. Es zeigen Fig. 1 ein erstes Ausführungsbeispiel der Erfindung, Fig. 2 ein weiteres Ausführungsbeispiel der Erfindung mit besonders einfacher Ansteuerschaltung, Fig. 3 ein weiteres Ausführungsbeispiel mit Feldeffekttransistoren als Stromsensoren und Fig. 4 ein viertes Ausführungsbeispiel der Erfindung.

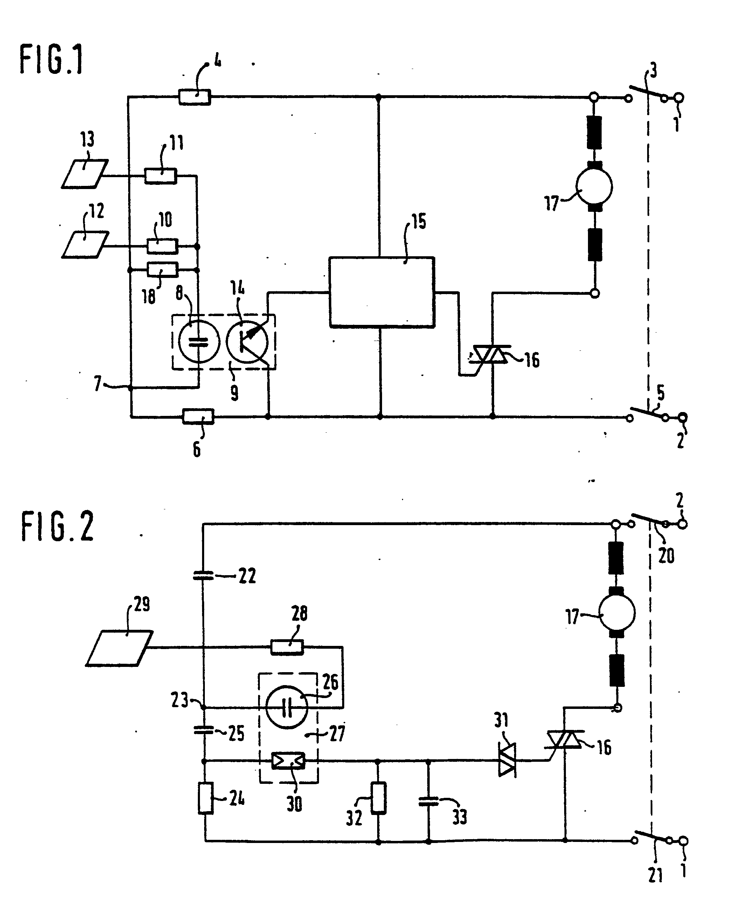

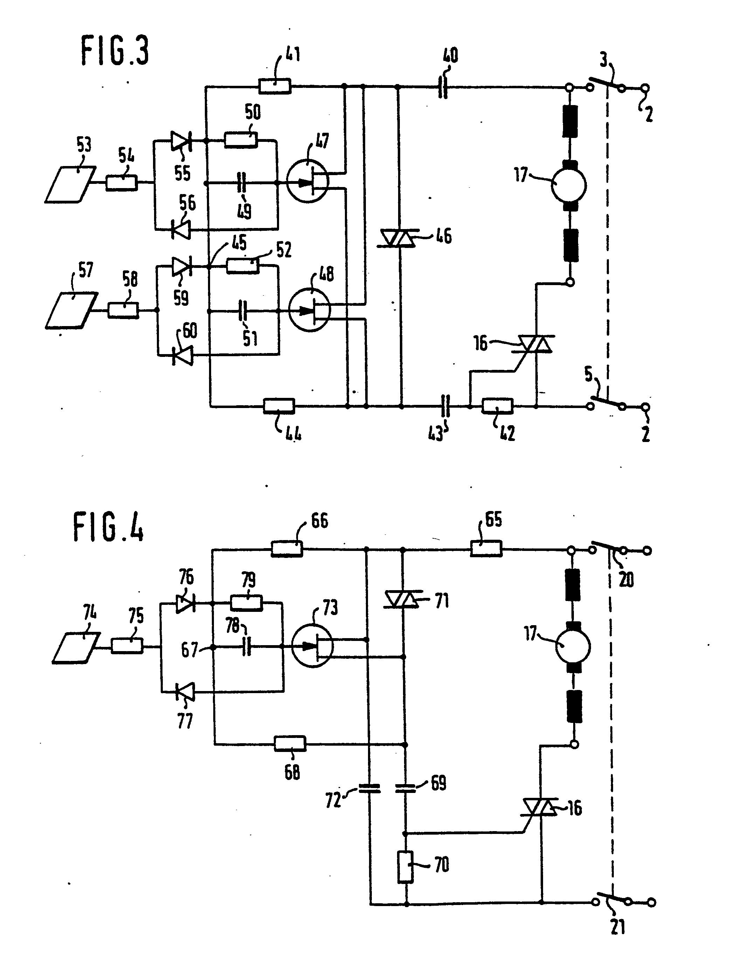

Das Grundprinzip ist in Fig. 1 dargestellt. An eine Netzklemme 1 ist über einen Schalter 3 ein Widerstand 4 angeschlossen. An eine Netzklemme ist ebenfalls ein Schalter 5 angeschlossen, dem ein Widerstand 6 folgt. Die beiden anderen Enden der Widerstände 4 und 6 sind an einen Verbindungspunkt 7 geführt. An den Verbindungspunkt 7 angeschlossen ist eine Glimmlampe 8 eines Optokopplers 9, der seinerseits über Widerstände 10 und 11 mit Berührungstasten 12 und 13 in Verbindung steht. Als Aufnehmer des Optokopplers 9 dient ein Fototransistor 14, dessen Kollektor mit der Netzklemme 2 und dessen Emitter mit dem Eingang einer Auswerteschaltung 15 verbunden ist. Die Auswerteschaltung 15 wird über zwei Leitungen, die an die Klemmen 1 und 2 angeschlossen sind, mit Strom versorgt. Der Ausgang der Auswerteschaltung 15, für die beispielsweise die integrierte Schaltung TDA 1085 A der Firma Motorola verwendet werden kann, führt zum Zündeingang eines Triacs 16, der mit seinem einen Pol über den Schalter 5 an die Klemmen 2 angeschlossen ist. Die andere Seite des Triacs 16 führt zu einem Motor 17, der seinerseits über den Schalter 3 mit der Netzklemme 1 verbunden ist. Ein Widerstand 18 ist zwischen der Glimmlampe 8 und den Widerständen 10 und 11 angeschlossen und führt zum Verbindungspunkt 7.

An den Netzklemmen 1 und 2 wird die elektrische Spannung eingespeist. Die Kontakte 3 und 5, die mechanisch miteinander verbunden sind und gemeinsam betätigt werden, bilden den Netzschalter des Gerätes. Da zwei sensible Flächen 12 und 13 vorhanden sind, kann der Netzschalter arretierbar ausgeführt werden. Die Widerstände 4 und 6 sind annähernd gleich groß und bilden einen ohmschen Spannungsteiler mit dem Verbindungspunkt 7. Statt des ohmschen Spannungsteilers kann auch ein kapazitiver Spannungsteiler verwendet werden, hierbei sind dann die Widerstände 4 und 6 durch Kondensatoren zu ersetzen. Vom Verbindungspunkt 7 aus werden die sensiblen Flächen 12 und 13 mit Spannung versorgt. Die Widerstände 10 und 11 dienen als Schutzwiderstände und müssen nach den einschlägigen Sicherheitsbestimmungen ausgelegt werden. Sie begrenzen den Strom, der über den Körper des Bedienenden fließt, auf einen ungefährlichen Wert. Mit den Widerständen 10, 11 und 18 wird ein Schwellwertverhalten erzeugt, wobei die Schaltschwelle so gewählt ist, daß beim Berühren nur einer Fläche die Zündspannung der Glimmlampe 8 nicht erreicht wird. Erst wenn beide Flächen berührt werden, ergibt sich ein ausreichender Spannungsabfall am Widerstand 18, so daß die Glimmlampe zündet. Mit dem Zünden der Glimmlampe 8 wird der Fototransistor 14 aktiviert, der über eine handelsübliche Auswerteschaltung 15 den Triac 16 zündet. Der Motor 17, beispielsweise einer Heckenschere, beginnt nun zu arbeiten. Wird nun eine der Flächen 12 oder 13 losgelassen, erlischt die Glimmlampe 8, so daß die Auswerteschaltung 15 kein Signal mehr empfängt und der Triac 16 erlischt. Das Gerät bleibt stehen.

Die sensiblen Flächen 12 und 13 sind an dem Elektrowerkzeug beispielsweise in Handgriffen blank oder isoliert angebracht, so daß sie beim Arbeiten mit dem Werkzeug entweder direkt berührt werden oder mit der Hand des Bedienenden eine Kapazität bilden. Der Stromkreis zwischen Netz und Erde wird dabei entweder ohmsch oder kapazitiv geschlossen.

In Fig. 2 wird an die Netzklemmen 1 und 2 wiederum die elektrische Spannung angelegt. Den Netzklemmen 1 und 2 folgen der Schalter mit den Kontakten 20 und 21, der in diesem Ausführungsbeispiel nicht arretierbar auszuführen ist. An den Schalter ist in Reihe der Motor 17 und der Triac 16 angeschlossen. Des weiteren geht vom Schalter 20 ein Kondensator 22 ab, der zum Verbindungspunkt 23 führt. Vom Schalter 21 führt eine Reihenschaltung aus einem Widerstand 24 und einem Kondensator 25 zum Verbindungspunkt 23. An den Verbindungspunkt 23 ist eine Glimmlampe 26 eines Optokopplers 27 angeschlossen, die über einen Widerstand 28 zu einer sensiblen Fläche 29 führt. Zwischen Kondensator 25 und Widerstand 24 ist ein Abgriff vorgesehen, der zu einem Fotowiderstand 30 des Optokopplers 27 führt. Der andere Anschlußpunkt des Fotowiderstands 30 führt über eine Triggerdiode 31 zum Zündeingang des Triacs 16. Ein Widerstand 32 und ein Kondensator 33 sind parallel geschaltet und einerseits zwischen Fotowiderstand 30 und Triggerdiode 31, andererseits zwischen Widerstand 24 und Schalter 21 angeschlossen.

Die Schaltungsanordnung arbeitet ähnlich der der Fig. 1. Jedoch ist nur eine sensible Fläche 29 vorgesehen, so daß die mechanisch miteinander verbundenen Kontakte 20 und 21 nicht arretierbar sein dürfen. Die Glimmlampe 26 zündet bereits beim Berühren der einen Fläche 29. Am Widerstand 24 wird eine Hilfsspannung gewonnen, die üblicherweise 10—20% der Netzspannung beträgt. Sie wird über den Fotowiderstand 30 dem Kondensator 33 zugeführt. Sobald nun die Glimmlampe 26 durch Berühren der Fläche 29 leuchtet und den Fotowiderstand 30 niederohmig macht, erzeugt die Triggerdiode 31 in üblicher Weise einen Impuls für den Triac 16. Der Widerstand 32 verhindert, daß der Kondensator 33 bereits durch den Dunkelwiderstand des Fotowiderstands 30 aufgeladen wird.

Der Spannungsteiler mit dem Verbindungspunkt 23 wird hier mit den Kapazitäten 22 und 25 erzeugt. Dadurch eilt die am Widerstand 24 gewonnene Hilfsspannung der Netzspannung um annähernd 90° vor. Dies hat den Vorteil, daß die Zündung des Triacs in der Nähe des Nulldurchgangs erfolgen kann.

In Fig. 3 sind wiederum an die Netzklemmen 1 und 2 ein Schalter mit dem Kontakten 3 und 5 angeschlossen. Da zwei sensible Flächen vorgesehen sind, sind die Kontakte 3 und 5 wiederum arretierbar zu gestalten. An die Kontakte 3 und 5 sind in Reihe der Motor 17 und der Triac 16 angeschlossen. An den Kontakt 3 angeschlossen ist des weiteren ein Kondensator 40, dem ein Widerstand 41 folgt. An den Kontakt 5 ist ein Widerstand 42 und danach ein Kondensator 43 angeschlossen. Dem Kondensator 43 folgt ein Widerstand 44, der zusammen mit dem anderen Ende des Widerstandes 41 an den Verbindungspunkt 45 angeschlossen ist. Der Zündeingang des Triacs 16 ist zwischen Kondensator 43 und Widerstand 42 angeschlossen. Zwischen Kondensator 40 und Widerstand 41 einerseits und Kondensator 43 und Widerstand 44 andererseits sind die Triggerdiode 46 und die Source-Drain-Strecken von Feldeffekttransistoren 47 und 48 angeschlossen. Das Gate des Feldeffekttransistors 47 ist über einen Kondensator 49 und einen Widerstand 50 mit dem Verbindungspunkt 45 verbunden. Vom Verbindungspunkt 45 führt außerdem zum Gate des Feldeffekttransistors 48 ein Kondensator 51 und ein Widerstand 52. Eine sensible Fläche 53 ist über einen Widerstand 54 und über eine Diode 55 mit dem Verbindungspunkt 45 verbunden, während eine Diode 56 vom Widerstand 54 zum Gate des Feldeffekttransistors 47 führt. Eine sensible Fläche 57 ist mit einem Widerstand 58 verbunden, der seinerseits über eine Diode 59 an den Verbindungspunkt 45 und über eine Diode 60 an das Gate des Feldeffekttransistors 48 angeschlossen ist.

Die Kondensatoren 40 und 43 bilden hier wiederum einen kapazitiven Spannungsteiler, dessen Verhältnis in etwa 1 : 1 sein soll. Die Feldeffekttransistoren 40 und 48 haben die Funktion eines steuerbaren Widerstandes, die die Triggerdiode 46 je nach Eingangssignal kurz schließen oder frei geben. Erhalten die Feldeffekttransistoren keine Gatespannung, so sind sie niederohmig. Es fließt ein rein sinusförmiger Strom durch die Kondensatoren 40 und 43, die Feldeffekttransistoren 47 und 48 und den Widerstand 42. Der Widerstand 42 wird dabei so bemessen, daß der durch diesen Ruhestrom erzeugte Spannungsabfall die Zündspannung des Triacs 16 nicht erreicht, so daß in diesem Betriebszustand der Triac nicht zündet. Wird die Fläche 53 berührt, so fließt vom Verbindungspunkt 45 eine Halbwelle des Ableitstroms über die Diode 55 und den Widerstand 54, die andere Halbwelle über den Kondensator 49, die Diode 56 und den Widerstand 54 zur Erde. Dabei wird der Kondensator 49 geladen, der Feldeffekttransistor 47 erhält am Gate Spannung und wird hochohmig. Der gleiche Vorgang spielt sich ab, wenn die Fläche 57 berührt wird. Dann wird ebenfalls der Feldeffekttransistor 48 hochohmig und sperrt. Werden sowohl Fläche 53 als auch Fläche 57 berührt, so sperren die beiden Feldeffekttransistoren 47 und 48, so daß die Spannung an der Triggerdiode 46 zwangsläufig ansteigt. Bei Erreichen der Durchbruchsspannung wird die Triggerdiode 46 leitend, der schlagartige Spannungsrückgang erzeugt in bekannter Weise die Stromimpulse, die zur Zündung des Triacs 16 dienen. Der Spannungsabfall am Widerstand 42 ist bei diesem Impulsstrom erheblich größer als beim sinusförmigen Ruhestrom. Die Durchbruchsspannung an der Triggerdiode entsteht während des Umladens der Kondensatoren 40 und 43. Dies bedeutet, daß sie gegenüber der Netzspannung um 90° voreilend ist. Die Zündimpulse werden dadurch vorteilhafterweise in den Nulldurchgängen erzeugt, so daß im gezündeten Zustand die Spannung vollständig am Motor anliegt. Phasenanschnitte treten nicht auf. Werden die Flächen 53 und 57 losgelassen, so dienen die Widerstände 50 und 52 zum Entladen der Kondensatoren 49 oder 51.

Die Schaltungsanordnung nach Fig. 3 ist auch mit einer einzigen sensiblen Fläche ausführbar. Es entfällt ein Feldeffekttransistor mit dem dazugehörigen Steuerwerk. Um die Zweihandsicherung trotzdem zu erreichen, dürfen die Kontakte 3 und 5 nicht arretierbar sein.

In Fig. 4 ist eine Variante der Fig. 3 dargestellt. An die Netzklemmen 1 und 2 sind wiederum Kontakte 20 und 21 eines Netzschalters angeschlossen, die nicht arretierbar sein dürfen. An die Kontakte 20 und 21 ist in Reihenschaltung der Motor 17 und der Triac 16 angeschlossen. Dem Kontakt 20 folgt des weiteren ein Widerstand 65, dem ein weiterer Widerstand 66 folgt. Der Widerstand 66 ist an den Verbindungspunkt 67 angeschlossen. Vom Verbindungspunkt 67 ausgehend folgt ein Widerstand 68, der zu einem Kondensator 69 führt. Der Kondensator 69 ist über einen Widerstand 70 mit dem Kontakt 21 verbunden. Zwischen Kondensator 69 und Widerstand 70 ist der Zündeingang des Triacs 16 angeschlossen. Von der Verbindungsleitung der Widerstände 65 und 66 führen Leitungen zu einer Triggerdiode 71, einem Kondensator 72 und zur Source eines Feldeffekttransistors 73. Die Triggerdiode 71 ist des weiteren zwischen Widerstand 68 und Kondensator 69 und an den Drain des Feldeffekttransistors 73 angeschlossen, während der Kondensator 72 mit seinem weiteren Anschluß zum Kontakt 21 führt. Eine sensible Fläche 74 ist mit einem Widerstand 75 verbunden, von dem einerseits eine Diode 76 zum Verbindungspunkt 67 andererseits eine Diode 77 zum Gate des Feldeffekttransistors 73 führt. Zwischen Verbindungspunkt 67 und Gate des Feldeffekttransistors 73 ist des weiteren ein Kondensator 78 und ein Widerstand 79 angeschlossen.

In dieser Schaltungsanordnung wird ein gemischt ohmscher/kapazitiver Spannungsteiler verwendet, der aus dem Widerstand 65 und dem Kondensator 72 gebildet wird. Der Spannungsteiler hat hier den Vorteil, daß er gleichzeitig als RC-Netzfilter wirkt, so daß Störimpulse, die vom Netz kommen, durch den Kondensator 72 kurzgeschlossen werden. Der Kondensator 69 überträgt die Zündimpulse der Triggerdiode 71 auf den Zündeingang des Triacs 16. Der Widerstand 65 wird dabei zweckmäßigerweise so ausgelegt, daß er gleich dem netzfrequenten Scheinwiderstand der Parallelschaltung der Kondensatoren 69 und 72 ist. Der Widerstand 70 ist so ausgelegt, daß ein Zünden des Triacs durch den sinusförmigen Ruhestrom nicht möglich ist.

Die sensible Fläche 74 wirkt auf den Feldeffekttransistor 73 so ein, wie dies bereits anhand der Fig. 3 beschrieben worden ist. Liegt keine Berührung der Fläche 74 vor, ist der Feldeffekttransistor 73 leitend, so daß die Triggerdiode 71 keine Wirkung entfalten kann, der Triac 16 zündet nicht. Wird die 74 berührt, so sperrt der Feldeffekttransisor 73, die Triggerdiode 71 ist im Zündkreis wirksam.

**Patentansprüche**

1. Zweihandsicherung für elektrische Geräte mit einem elektrischen Schalter (3, 5) und zumindest einem weiteren elektrischen Schalter (14, 27, 47, 48, 73), der durch sensible Flächen (12, 13, 29, 53, 57, 74) gesteuert ist, wobei die Schalter (14, 27, 47, 48, 73) und die sensiblen Flächen (12, 13, 29, 53, 57, 74) mit der Netzzuleitung in Verbindung stehen, dadurch gekennzeichnet, daß in jedem Zweig der Netzzuleitung ein Widerstand (4, 6) und/oder ein Kondensator (22, 25; 40, 43) geschaltet ist, die einen Spannungsteiler mit einem gemeinsamen Mittelpunkt (7, 23, 45) bilden, an den über einen Widerstand (10, 11, 28, 54, 58) sensible Flächen (12, 13, 29, 53, 57) angeschlossen sind, wobei der Widerstand (10, 11, 28, 54, 58) den Strom, der über den Körper des Bedienenden fließt, auf einen ungefährlichen Wert begrenzt.

2. Zweihandsicherung für elektrische Geräte mit einem elektrischen Schalter (3, 5) und zumindest einem weiteren elektrischen Schalter (14, 27, 47, 48, 73), der durch sensible Flächen (12, 13, 29, 53, 57, 74) gesteuert ist, wobei die Schalter (14, 27, 47, 48, 73) und die sensiblen Flächen (12, 13, 29, 53, 57, 74) mit der Netzzuleitung in Verbindung stehen, dadurch gekennzeichnet, daß in einem Zweig der Netzzuleitung ein Widerstand (65), im anderen Zweig der Netzzuleitung ein Kondensator (69) geschaltet ist, die einen Spannungsteiler mit einem gemeinsamen Mittelpunkt bilden, an den über einen Widerstand (75) zumindest eine sensible Fläche (74) angeschlossen ist, wobei der Widerstand (75) den Strom, der über den Körper des Bedienenden fließt, auf einen ungefährlichen Wert begrenzt.

3. Zweihandsicherung nach Anspruch 1 oder 2, dadurch gekennzeichnet, daß zwischen dem gemeinsamen Mittelpunkt (7, 23) und der sensiblen Fläche (12, 13, 29) als stromempfindliches Bauelement ein Geber (8, 26) eines Optokupplers (9, 27) eingeschaltet ist.

4. Zweihandsicherung nach Anspruch 3, dadurch gekennzeichnet, daß der Geber (8, 26) als Glimmlampe ausgebildet ist.

5. Zweihandsicherung nach einem der vorhergehenden Ansprüche, dadurch gekennzeichnet, daß als Stromsensor ein steuerbares Bauelement, insbesondere ein Transistor oder Feldeffekttransistor (47, 48, 74) dient.

6. Zweihandsicherung nach einem der vorhergehenden Ansprüche, dadurch gekennzeichnet, daß bei Stromfluß durch das stromempfindliche Bauelement ein Triac (16) oder ein Thyristor geschaltet wird.

7. Zweihandsicherung nach Anspruch 6, dadurch gekennzeichnet, daß das stromempfindliche Bauelement den Triac (16) oder Thyristor über eine Auswerteschaltung (15) ansteuert.

8. Zweihandsicherung nach Anspruch 7, dadurch gekennzeichnet, daß die Auswerteschaltung als RC-Glied (32, 33; 42, 43; 69, 70) ausgebildet ist.

9. Zweihandsicherung nach einem der Ansprüche 6 bis 8, dadurch gekennzeichnet, daß der Triac (16) oder Thyristor in den Stromkreislauf des elektrischen Gerätes (17) geschaltet ist.

10. Zweihandsicherung nach einem der vorhergehenden Ansprüche, dadurch gekennzeichnet, daß zwischen die beiden Netzzuleitungen die Reihenschaltung des Kondensators (40) oder des Widerstandes (65), einer Triggerdiode (46, 71), des Kondensators (43, 69) und eines weiteren Widerstandes (42, 70) geschaltet ist.

11. Zweihandsicherung nach Anspruch 10, dadurch gekennzeichnet, daß parallel zur Triggerdiode (46, 71) die Hauptstrecke von zumindest einem steuerbaren Bauelement (47, 48, 53) liegt.

12. Zweihandsicherung nach Anspruch 11, dadurch gekennzeichnet, daß die sensible Fläche (53, 57, 74) über ein Widerstandsdiodennetzwerk (49, 50, 55, 56; 51, 52, 59, 60; 76, 77, 78, 79) auf den Steuereingang des steuerbaren Bauelementes (47, 48, 73) einwirkt.

13. Zweihandsicherung nach einem der Ansprüche 10 bis 12, dadurch gekennzeichnet, daß parallel zur Triggerdiode (46, 71) ein ohmscher Spannungsteiler mit Widerständen (41, 44; 66, 68) geschaltet ist, an dessen Mittelabgriff über Widerstände (54, 58, 75) sensible Flächen (53, 57, 74) angeschlossen sind.

14. Zweihandsicherung nach einem der Ansprüche 10 bis 13, dadurch gekennzeichnet, daß parallel zu dem weiteren Widerstand (42, 70) die Gate-Kathoden-Strecke des Triacs (16) oder des Thyristors angeschlossen ist.

15. Zweihandsicherung nach einem der vorhergehenden Ansprüche, dadurch gekennzeichnet, daß die sensiblen Flächen in Handgriffen elektrischer Geräte untergebracht sind.

16. Zweihandsicherung nach Anspruch 15, dadurch gekennzeichnet, daß die Handgriffe auf der gesamten begreifbaren Fläche mit sensibler Fläche belegt sind.

## Claims

1. Two-hand guard for electric equipment, comprising an electric switch (3, 5) and at least one further electric switch (14, 27, 47, 48, 73) which is controlled by sensitive areas (12, 13, 29, 53, 57, 74), the switches (14, 27, 47, 48, 73) and the sensitive areas (12, 13, 29, 53, 57, 74) being connected to the mains supply line, characterised in that in each branch of the mains supply line a resistor (4, 6) and/or a capacitor (22, 25; 40, 43) are connected which form a voltage divider having a common centre (7, 23, 45) to which via a resistor (10, 11, 28, 54, 58) sensitive areas (12, 13, 29, 53, 57) are connected, in which arrangement the resistor (10, 11, 28, 54, 58) limits the current flowing through the body of the operator to a harmless value.

2. Two-hand guard for electric equipment, comprising an electric switch (3, 5) and at least one further electric switch (14, 27, 47, 48, 73) which is controlled by sensitive areas (12, 13, 29, 53, 57, 74), the switches (14, 27, 47, 48, 73) and the sensitive areas (12, 13, 29, 53, 57, 74) being connected to the mains supply line, characterised in that in one branch of the mains supply line a resistor (65) and in the other branch of the mains supply line a capacitor (69) is connected which form a voltage divider having a common centre to which at least one sensitive area (74) is connected via a resistor (75), the resistor (75) limiting the current flowing through the body of the operator to a harmless value.

3. Two-hand guard according to Claim 1 or 2, characterised in that between the common centre (7, 23) and the sensitive area (12, 13, 29) a transmitter (8, 26) of an opto-coupler (9, 27) is inserted as a currentsensitive component.

4. Two-hand guard according to Claim 3, characterised in that the transmitter (8, 26) is constructed as a glow lamp.

5. Two-hand guard according to one of the preceding Claims, characterised in that a controllable component, particularly a transistor or field effect transistor (47, 48, 74), is used as a current sensor.

6. Two-hand guard according to one of the preceding Claims, characterised in that a triac (16) or a thyristor is switched if current flows through the current-sensitive component.

7. Two-hand guard according to Claim 6, characterised in that the current-sensitive component switches the triac (16) or thyristor via an evaluating circuit (15).

8. Two-hand guard according to Claim 7, characterised in that the evaluating circuit is constructed as an RC section (32, 33; 42, 43; 69, 70).

9. Two-hand guard according to one of Claims 6 to 8, characterised in that the triac (16) or thyristor is connected into the circuit of the electric equipment (17).

10. Two-hand guard according to one of the preceding Claims, characterised in that between the two mains supply lines the series circuit of the capacitor (40) or of the resistor (65), a trigger diode (46, 71), the capacitor (43, 69) and another resistor (42, 70) is connected.

11. Two-hand guard according to Claim 10, characterised in that the main path of at least one controllable component (47, 48, 53) is located in parallel with the trigger diode (46, 71).

12. Two-hand guard according to Claim 11, characterised in that the sensitive area (53, 57, 74) acts via a resistor-diode network (49, 50, 55, 56; 51, 52, 59, 60; 76, 77, 78, 79) on the control input of the controllable component (47, 48, 73).

13. Two-hand guard according to one of Claims 10 to 12, characterised in that in parallel with the triggerdiode (46, 71), a resistive voltage divider comprising resistors (41, 44; 66, 68) is connected, to the centre tap of which sensitive areas (53, 57, 74) are connected via resistors (54, 58, 75).

14. Two-hand guard according to one of Claims 10 to 13, characterised in that the gate-cathode path of the triac (16) or of the thyristor is connected in parallel with the further resistor (42, 70).

15. Two-hand guard according to one of the preceding Claims, characterised in that the sensitive areas are accommodated in the handles of electric equipment.

16. Two-hand guard according to Claim 15, characterised in that the handles are covered with a sensitive surface over the entire area which can be gripped.

## Revendications

1. Sécurité à deux mains pour appareillages électriques à interrupteurs àlectriques (3, 5) et au moins un autre interrupteur électrique (14, 27, 47, 48, 73) qui est commandé par des surfaces sensibles (12, 13, 29, 53, 57, 74), les interrupteurs (14, 27, 47, 48, 73) et les surfaces sensibles (12, 13, 29, 53, 57, 74) étant en liaison avec la ligne du réseau, caractérisée en ce qu'à chaque branche de la ligne du réseau est associée une résistance (4, 6) et/ou un condensateur (22, 25; 40, 43) qui forment un diviseur de tension avec un point médian commun (7, 23, 45) auquel sont reliées des surfaces sensibles (12, 13, 29, 53, 57) par une résistance (10, 11, 28, 54, 58), la résistance (10, 11, 28, 54, 58) limitant le courant qui passe par le corps de l'utilisateur à une valeur non dangereuse.

2. Sécurité à deux mains pour appareillages électriques à interrupteurs électriques (3, 5) et au moins un autre interrupteur électrique (14, 27, 47, 48, 73) commandé par des surfaces sensibles (12, 13, 29, 53, 57, 74), les interrupteurs (14, 27, 47, 48, 73) et les surfaces sensibles (12, 13, 29, 53, 57, 74) étant reliés à la ligne du réseau, caractérisée en ce que dans une branche de la ligne du réseau, se trouve une résistance (65) et dans l'autre branche de la ligne du réseau un condensateur (69) qui forment un diviseur de tension avec un point médian commun auquel est reliée au moins une surface sensible (74) par l'intermédiaire d'une résistance (74), la résistance (75) limitant le courant qui traverse le corps de l'utilisateur à une valeur non dangereuse.

3. Sécurité à deux mains selon la revendication 1 ou 2, caractérisée en ce qu'entre le point médian commun (7, 23) et la surface sensible (12, 13, 29) est branché comme composant sensible au courant un capteur (8, 26) d'un coupleur optique (9, 27).

4. Sécurité à deux mains selon la revendication 3, caractérisée en ce que le capteur (8, 26) est réalisé sous la forme d'une lampe à lueur.

5. Sécurité à deux mains selon l'une quelconque des revendications précédentes, caractérisée en ce que le capteur de courant est un composant susceptible d'être commandé notamment un transistor ou un transistor à effet de champ (47, 48, 74).

6. Sécurité à deux mains selon l'une quelconque des revendications précédentes, caractérisée en ce que le passage du courant dans le composant sensible au courant commute un triac (16) ou un thyristor.

7. Sécurité à deux mains selon la revendication 6, caractérisée en ce que le composant sensible au courant commande le triac (16) ou le thyristor par l'intermédiaire d'un circuit d'exploitation (15).

8. Sécurité à deux mains selon la revendication 7, caractérisée en ce que le circuit d'exploitation est un élément RC (32, 33; 42, 43; 69, 70).

9. Sécurité à deux mains selon l'une des revendications 6 à 8, caractérisée en ce que le triac (16) ou le thyristor sont branchés dans le circuit de courant de l'appareil électrique (17).

10. Sécurité à deux mains selon l'une des revendications précédentes, caractérisée en ce qu'entre les deux lignes du réseau se trouve branché le montage en série du condensateur (40) ou d'une résistance (65), d'une diode de déclenchement (46, 71), d'un condensateur (43, 69) et d'une autre résistance (42, 70).

11. Sécurité à deux mains selon la revendication 10, caractérisée en ce qu'en parallèle à la diode de déclenchement (46, 71) se trouve le chemin principal d'au moins un composant susceptible d'être commandé (47, 48, 53).

12. Sécurité à deux mains selon la revendication 11, caractérisée en ce que la surface sensible (53, 57, 74) agit sur l'entrée de commande d'un composant susceptible d'être commandé (47, 48, 73) par l'intermédiaire d'un réseau à diode et résistance (49, 55, 56; 51, 52, 59, 60, 76, 77, 78, 79).

13. Sécurité à deux mains selon l'une des revendications 10 à 12, caractérisée en ce qu'en parallèle à la diode de déclenchement (46, 71) est branché un diviseur de tension ohmique avec des résistances (41, 44; 66, 68) dont la prise médiane est reliée par des résistances (54, 58, 75) aux surfaces sensibles (53, 57, 74).

14. Sécurité à deux mains selon l'une des revendications 10 à 13, caractérisée en ce qu'en parallèle à l'autre résistance (42, 70) se trouve branché le chemin porte-cathode du triac (16) ou du thyristor.

15. Sécurité à deux mains selon l'une des revendications précédentes, caractérisée en ce que les surfaces sensibles sont logées dans les poignées de l'appareil électrique.

16. Sécurité à deux mains selon la revendication 15, caractérisée en ce que les poignées sont occupées par les surfaces sensibles sur toute la surface destinée à être saisie à la main.

**FIG.1**

**FIG.2**

FIG.3

FIG.4